# EUROPÄISCHE PATENTSCHRIFT

(11) **EP 4 444 664 B1**
(45) Veröffentlichungstag und Bekanntmachung des Hinweises auf die Patenterteilung: **21.10.2026**
(21) Anmeldenummer: 22809173.2
(22) Anmeldetag: 14.11.2022
(51) Int. Cl.: C03B 1/00, C03C 1/00, C03B 5/00

(54) **VERFAHREN ZUR AUFBEREITUNG VON GLASBEHÄLTNISSEN BZW. GLASSCHERBEN**
METHOD FOR PROCESSING GLASS CONTAINERS OR GLASS FRAGMENTS
PROCÉDÉ DE TRAITEMENT DE RÉCIPIENTS EN VERRE OU DE FRAGMENTS DE VERRE

(30) Priorität: 08.12.2021 DE 102021132267
(43) Veröffentlichungstag der Anmeldung: 16.10.2024
(73) Patentinhaber: Verallia Packaging SAS, 92400 Courbevoie (FR)
(72) Erfinder: BEUTINGER, Markus, 88326 Aulendorf (DE); EICH, Stefan, 88430 Rot an der Rot (DE)
(74) Vertreter: Moser Götze & Partner Patentanwälte mbB
(86) Internationale Anmeldenummer: PCT/EP2022/081712
(87) Internationale Veröffentlichungsnummer: WO 2023/104429

(56) Entgegenhaltungen:
- WO-A1-2014/053627
- CN-A- 110 577 360
- DE-U1- 7 620 910

## Beschreibung

Die Erfindung bezieht sich auf ein Verfahren zur Aufbereitung von Glasbehältnissen bzw. Glasscherben, bei dem die Glasbehältnisse bzw. Glasscherben nach Farben sortiert werden.

Zur Schonung von Rohstoffen wurde in den vergangenen Jahrzehnten auch für Glas, Glasbehältnisse etc. eine Kreislaufwirtschaft installiert, bei der gebrauchtes Glas, gebrauchte Glasbehältnisse etc. einer Wiederverwendung im Rahmen der Herstellung neuen Glases, neuer Glasbehältnisse etc. zugeführt worden sind.

DE7620910 U1 lehrt die Wiederverwertung von Altglas in der Glasindustrie zur Glasherstellung. In dem beschrieben Verfahren wird das Altglas zerkleinert und der dabei anfallende Glassand wird den gereinigten Glasscherben zugesetzt, um dann in der Glasindustrie genutzt werden zu können.

CN110577360 A offenbart die Farbsortierung von Altglas, wobei Braunglas abgesondert, gereinigt, gemahlen und dann glasfremde Bestandteile entfernt werden. Dieses so aufbereitete Braunglas wird zur Herstellung von neuem Braunglas genutzt.

Ausgehend von dem vorstehend geschilderten Stand der Technik liegt der Erfindung die Aufgabe zugrunde, die bekannten Verfahren zum Recycling und Wiederverwenden gebrauchten Glases bzw. gebrauchter Glasbehältnisse derart weiterzubilden, dass einerseits der Anteil des recycelten bzw. verwendeten Glases erhöht wird und andererseits der verfahrenstechnische Aufwand für die Herstellung neuen Glases bzw. neuer Glasbehältnisse aus recyceltem Glas bzw. recycelten Glasbehältnissen reduziert werden kann.

Diese Aufgabe wird erfindungsgemäß durch das Verfahren in Anspruch 1 gelöst.

Gemäß einer vorteilhaften Ausführungsform des erfindungsgemäßen Verfahrens zur Aufbereitung von Glasbehältnissen bzw. Glasscherben wird aus den Glasbehältnissen bzw. Glasscherben als Glassand eine Kornfraktion mit einer Korngröße <10 mm abgesiebt. Selbstverständlich ist es auch möglich, als Glassand eine Kornfraktion mit einer Korngröße <6 mm oder noch kleiner abzusieben. Diesbezüglich sei darauf hingewiesen, dass die als Glassand abgesiebte Korngröße umso kleiner sein kann, je höher die technische Qualität der der Siebung nachgeschalteten Sortierungsstufe ist.

Um die Qualität des abgesiebten Glassands für den Einsatz als Rohstoff in der Glasschmelzwanne zu erhöhen, wird erfindungsgemäß vorgeschlagen, dass aus der den Glassand bildenden abgesiebten Kornfraktion organische Partikel, z.B. mittels Windsichtung und/oder Absaugung, abgetrennt werden. Derartige Verunreinigungen führen dann nicht zu Qualitätseinbußen des neu hergestellten Glases bzw. daraus hergestellter Glasbehältnisse. Um zu verhindern, dass das neu hergestellte Glas bzw. die daraus hergestellten Glasbehältnisse Unregelmäßigkeiten aufgrund noch im gereinigten Glassand befindlichen keramischen Bestandteilen aufweisen, wird gemäß einer weiteren vorteilhaften Ausführungsform des erfindungsgemäßen Verfahrens vorgeschlagen, die von organischen Partikeln bereinigte Kornfraktion vorzugsweise auf eine maximale Korngröße von 0,1 bis 0,8 mm aufzumahlen. Die in größeren Kornfraktionen nicht aufschmelzbaren keramischen Bestandteile des Glassands sind dann in der Glasschmelzwanne aufschmelzbar.

Um die Staubentwicklung beim Einbringen des Glassands in die Glasschmelzwanne soweit möglich zu reduzieren, wird gemäß einer weiteren vorteilhaften Ausgestaltung des erfindungsgemäßen Verfahrens vorgeschlagen, die den Glassand bildende Kornfraktion in eine Gemengeanlage einzutragen, in dieser Gemengeanlage mit anderen Rohstoffen zu vermischen und als Bestandteil der in der Gemengeanlage hergestellten Mischung in die Glasschmelzwanne einzubringen.

Vorteilhaft werden bei dem erfindungsgemäßen Verfahren die Glasbehältnisse bzw. Glasscherben vor der Abtrennung des Glassandes nach den Farben weiss, braun und grün sortiert.

Der Gewichtsanteil des in die Glasschmelzwanne eingebrachten Glassandes an der Gesamtmenge des in die Glasschmelzwanne eingebrachten Glases dieser Farbe sollte maximal ca. 60 % betragen.

Vorteilhaft kann dieser Gewichtsanteil ca. 15 % bis 30 % betragen.

Im Folgenden wird die Erfindung anhand einer Ausführungsform näher beschrieben.

Bei einem Verfahren zur Aufbereitung von Glasbehältnissen bzw. Glasscherben werden die Glasbehältnisse bzw. Glasscherben einem Siebvorgang unterzogen, bei dem die Kornfraktion abgetrennt wird, deren maximaler Korndurchmesser - im beschriebenen Ausführungsbeispiel - 6 mm beträgt.

Grundsätzlich ist auch als Glassand eine Kornfraktion mit einer größeren maximalen Korngröße, z.B. 10 mm, oder einer kleineren maximalen Korngröße abtrennbar. Die Trennkorngröße wird z.B. dadurch vorgegeben, von welcher technischen Qualität die nach dem Siebvorgang stattfindende Sortierung, optische Sortierung etc., ist.

Im Falle des erfindungsgemäßen Verfahrens wird der abgesiebte Glassand, der aus Glasbehältnissen bzw. Glasscherben einer Farbe abgesiebt worden ist, in einer der Siebung nachgeschalteten Verfahrensstufe, bei der es sich um eine Windsichtung und/oder eine Absaugung handeln kann, von organischen Partikeln gereinigt.

Der von den organischen Partikeln befreite Glassand wird danach in einer Mahlstufe aufgemahlen, wobei mittels dieser Mahlstufe eine maximale Korngröße des Glassands von 0,1 bis 0,8 mm angestrebt wird.

Bevor der die genannte Korngröße aufweisende Glassand in die Glasschmelzwanne eingebracht wird, wird die diesen Glassand ausbildende Kornfraktion in eine Gemengeanlage eingetragen. In diese Gemengeanlage werden auch andere Rohstoffe für die Glasschmelzwanne eingetragen. In der Gemengeanlage wird der Glassand mit diesen anderen Rohstoffen vermischt. Danach wird die Mischung aus dem Glassand und den anderen Rohstoffen in die Glasschmelzwanne eingebracht. Hierdurch können aufgrund des Glassandes auftretende Verstaubungen etc. weitestgehend vermieden werden.

Als Rohstoff für das vorstehend geschilderte Verfahren zur Aufbereitung von Glasbehältnissen bzw. Glasscherben werden nach Farben getrennte Glasbehältnisse bzw. Glasscherben, **z.B.** weiße, braune und grüne Glasbehältnisse bzw. Glasscherben, eingesetzt.

Der Gewichtsanteil des in die Glasschmelzwanne eingebrachten Glassandes an der Gesamtmenge des in die Glasschmelzwanne eingebrachten Glases dieser Farbe kann maximal 60 %, vorzugsweise zwischen 15 % und 30 %, betragen.

## Patentansprüche

1. Verfahren zur Aufbereitung von Glasbehältnissen bzw. Glasscherben, bei dem die Glasbehältnisse bzw. Glasscherben nach Farben sortiert werden, bei dem aus nach Farben sortierten Glasbehältnissen bzw. Glasscherben der Glassand abgesiebt wird, bei dem der abgesiebte Glassand einer Farbe in eine Glasschmelzwanne zur Herstellung von Glas dieser Farbe eingebracht wird, bei dem aus der den Glassand bildenden abgesiebten Kornfraktion organische Partikel, z.B. mittels Windsichtung und /oder Absaugung, abgetrennt werden und bei dem die von organischen Partikeln bereinigte Kornfraktion vorzugsweise auf eine maximale Korngröße von 0,1 bis 0,8 mm, aufgemahlen wird.

2. Verfahren nach Anspruch 1, bei dem aus den Glasbehältnissen bzw. Glasscherben als Glassand eine Kornfraktion mit einer Korngröße <10 mm, vorzugsweise 6 mm, abgesiebt wird.

3. Verfahren nach Anspruch 1 oder 2, bei dem die den Glassand bildende Kornfraktion in eine Gemengeanlage eingetragen, in der Gemengeanlage mit anderen Rohstoffen vermischt und als Bestandteil der Mischung in die Glasschmelzwanne eingebracht wird.

4. Verfahren nach einem der Ansprüche 1 bis 3, bei dem die Glasbehältnisse bzw. Glasscherben nach den Farben weiss, braun und grün sortiert werden.

5. Verfahren nach einem der Ansprüche 1 bis **4,** bei dem ein Gewichtsanteil des in die Glasschmelzwanne eingebrachten Glassandes an der Gesamtmenge des in die Glasschmelzwanne eingebrachten Glases dieser Farbe von max. 60 % eingehalten wird.

6. Verfahren nach Anspruch 5, bei dem der Gewichtsanteil des in die Glasschmelzwanne eingebrachten Glassandes an der Gesamtmenge des in die Glasschmelzwanne eingebrachten Glases dieser Farbe von 15 % bis 30 % eingehalten wird.

## Claims

1. Method for processing glass containers or glass fragments, wherein the glass containers or glass fragments are sorted according to colour, wherein the glass sand is sieved from the glass containers or glass fragments sorted according to colour, wherein the sieved glass sand of one colour is introduced into a glass melting furnace for the production of glass of that colour, wherein organic particles are separated from the sieved grain fraction forming the glass sand, e.g., by means of air separation and/or suctioning, and wherein the grain fraction cleaned of organic particles is preferably ground to a maximum grain size of 0.1 to 0.8 mm.

2. Method according to claim 1, wherein a grain fraction with a grain size <10 mm, preferably 6 mm, is sieved from the glass containers or glass fragments as glass sand.

3. Method according to claim 1 or 2, wherein the grain fraction forming the glass sand is introduced into a batch plant, mixed with other raw materials in the batch plant and introduced into the glass melting furnace as a component of the mixture.

4. Method according to one of claims 1 to 3, wherein the glass containers or glass fragments are sorted according to the colours white, brown and green.

5. Method according to one of claims 1 to 4, wherein the weight fraction of the glass sand introduced into the glass melting furnace in relation to the total amount of glass of this colour introduced into the glass melting furnace is maintained at a maximum of 60 %.

6. Method according to claim 5, wherein the weight fraction of the glass sand introduced into the glass melting furnace in relation to the total amount of glass of this colour introduced into the glass melting furnace is maintained at 15 % to 30 %.

## Revendications

1. Procédé de traitement de récipients en verre ou de tessons de verre, dans lequel les récipients en verre ou les tessons de verre sont triés selon leur couleur,
le sable de verre est tamisé à partir des récipients en verre ou des tessons de verre triés selon leur couleur,
le sable de verre tamisé d'une couleur est introduit dans un creuset de verre en fusion pour produire du verre de cette couleur,
des particules organiques sont séparées de la fraction granulaire tamisée formant le sable de verre, par exemple par criblage à air et/ou par aspiration, et
la fraction granulaire débarrassée des particules organiques est de préférence broyée à une taille de grain maximale de 0,1 à 0,8 mm.

2. Procédé selon la revendication 1, dans lequel une fraction granulaire d'une taille < 10 mm, de préférence de 6 mm, est tamisée à partir de récipients en verre ou de tessons de verre sous forme de sable de verre.

3. Procédé selon la revendication 1 ou 2, dans lequel la fraction granulaire formant le sable de verre est introduite dans une installation par lots, mélangée à d'autres matières premières dans l'installation par lots et introduite dans le creuset de verre en fusion en tant que composant du mélange.

4. Procédé selon l'une des revendications 1 à 3, dans lequel les récipients en verre ou les tessons de verre sont triés selon les couleurs blanc, brun et vert.

5. Procédé selon l'une des revendications 1 à 4, dans lequel la fraction en poids du sable de verre introduit dans le creuset de verre en fusion par rapport à la quantité totale du verre de cette couleur introduite dans le creuset de verre en fusion est de 60 % maximum.

6. Procédé selon la revendication 5, dans lequel la fraction en poids du sable de verre introduit dans le creuset de verre en fusion par rapport à la quantité totale du verre de cette couleur introduite dans le creuset de verre en fusion est maintenue entre 15 % et 30 %.
